# EUROPÄISCHE PATENTSCHRIFT

(11) **EP 3 042 011 B1**
(45) Veröffentlichungstag und Bekanntmachung des Hinweises auf die Patenterteilung: **10.10.2018**
(21) Anmeldenummer: 14755808.4
(22) Anmeldetag: 22.08.2014
(51) Int. Cl.: E04H 12/08, E04H 12/12, E04H 12/34, F03D 13/20

(54) **VERFAHREN ZUR MONTAGE VON TURMEINBAUTEN**
METHOD FOR MOUNTING INTERNAL TOWER FITTINGS
PROCÉDÉ DE MONTAGE D'ÉQUIPEMENTS D'UNE TOUR

(30) Priorität: 27.08.2013 DE 102013217088
(43) Veröffentlichungstag der Anmeldung: 13.07.2016
(73) Patentinhaber: Senvion GmbH, 22297 Hamburg (DE)
(72) Erfinder: SAMUELSEN, Olaf, 24887 Hünning (DE)
(74) Vertreter: Glawe, Delfs, Moll
(86) Internationale Anmeldenummer: PCT/EP2014/067894
(87) Internationale Veröffentlichungsnummer: WO 2015/028400

(56) Entgegenhaltungen:
- DE-A1-102010 015 075
- DE-A1-102010 048 547
- DE-U1-202010 007 565
- DE-U1-202011 106 727

## Beschreibung

Die Erfindung betrifft ein Verfahren zur Montage von Turmeinbauten durch Einbringen von mindestens zwei gesonderten Versorgungsmodulen in einen Windenergieanlagenturm, wobei ein gesondertes Versorgungsmodul je ein Segment von mindestens zwei Systemkomponenten des Windenergieanlagenturms baulich zusammenfasst und wobei ein oberes Segmentende an einer Oberkante und ein unteres Segmentende an einer Unterkante des Versorgungsmoduls angeordnet ist.

Leistungsstarke Windenergieanlagen benötigen große Rotoren und hohe Windgeschwindigkeiten. Hohe Windgeschwindigkeiten finden sich weit über dem Boden. Daher werden die Türme der Windenergieanlagen sehr hoch gebaut. Zusätzlich ermöglichen hohe Windenergieanlagentürme größere Rotoren. Dazu benötigen die Türme eine genügend hohe Stabilität, um als Tragstruktur für die großen und damit auch schweren Rotoren zu fungieren. Der Bau dieser Türme erfolgt lokal auf der Baustelle der Windenergieanlage, da sie für eine Vorfertigung viel zu groß sind. Es hat sich bewährt, die Türme aus einer Mehrzahl übereinander angeordneter Turmsegmente aus Beton zu errichten. Die Turmsegmente können dabei vollständig oder teilweise aus Halbfertigelementen hergestellt werden. Hohe Türme können auf diese Weise auch in abgelegenen Gegenden effizient errichtet werden. Allerdings stellt sich das Problem der Herstellung und Montage der Turmeinbauten, die z. B. Leitungsmittel zur Übertragung der in der Gondel erzeugten elektrischen Energie oder Steuersignale zum Betrieb der Windenergieanlage oder eine Steigeinrichtung für das Bedienpersonal zum Turmaufstieg umfassen. Die Montage der Turmeinbauten in dem errichteten Turm ist aufwendig und gefährlich, da teilweise auch Arbeiten in großer Höhe erforderlich sind.

Aus der DE 10 2010 015 075 A1 ist bekannt, mindestens zwei Systemkomponenten der Turmeinbauten zu segmentieren und diese Segmente zu gesonderten Versorgungsmodulen baulich zusammenzufassen. Die Versorgungsmodule werden auf der Baustelle oder ab Werk vormontiert und zur Installation in den Turminnenraum eingebracht. Ein Versorgungsmodul wird dabei an der vorgesehenen Stelle an der Turminnenwand befestigt. Die Segmente der Systemkomponenten aneinander angrenzender Versorgungsmodule werden beispielsweise über Reihenschlusseinrichtungen aneinander angekoppelt. Fertigungsbedingte Toleranzen der Turmsegmente werden dabei entweder während der Verbindung von aneinander angrenzenden Versorgungsmodulen ausgeglichen oder am Versorgungsmodul, das am oberen Ende des Windenergieanlagenturms befestigt ist.

Aus der DE 20 2011 106 727 U1 ist es bekannt, Rohrsegmente nacheinander durch die Tür in den Turm einzubringen, wo dann die jeweiligen Systemkomponenten miteinander verbunden werden. Das Versorgungssystem wird so von unten nach oben aufgebaut und erst im letzten Schritt oben am Turm eingehängt.

Ferner ist aus der DE 20 2010 007 565 U1 bekannt, vormontierte Inneneinbauten jeweils am Turmflansch aufzuhängen, wodurch lediglich ein Aufbau von unten nach oben möglich ist. Vorzugsweise wird die Montage der Inneneinbauten hierbei in noch liegender Position des Turms durchgeführt.

Die der Erfindung zu Grunde liegende Aufgabe ist die Bereitstellung eines Verfahrens, das die Montage der Turmeinbauten weiter vereinfacht und die Sicherheit des Installationspersonals bei der Montage der Turmeinbauten erhöht.

Die Aufgabe wird gelöst durch die Merkmale des unabhängigen Anspruchs. Vorteilhafte Weiterbildungen sind Gegenstand der abhängigen Ansprüche.

Bei einem Verfahren zur Montage von Turmeinbauten durch Einbringen von mindestens zwei gesonderten Versorgungsmodulen in einen Windenergieanlagenturm, wobei ein gesondertes Versorgungsmodul je ein Segment von mindestens zwei Systemkomponenten des Windenergieanlagenturms baulich zusammenfasst und wobei ein oberes Segmentende an einer Oberkante und ein unteres Segmentende an einer Unterkante des Versorgungsmoduls angeordnet ist, ist erfindungsgemäß vorgesehen, dass es die Schritte: Anordnen der Oberkante eines ersten gesonderten Versorgungsmoduls an einem oberen Ende des Windenergieanlagenturms, Verbinden eines oberen Segmentendes des ersten gesonderten Versorgungsmoduls mit einem unteren Segmentende der entsprechenden Systemkomponente eines zweiten gesonderten Versorgungsmoduls und Anordnen der Oberkante des zweiten gesonderten Versorgungsmoduls an dem oberen Ende des Windenergieanlagenturms umfasst.

Nachfolgend seien zunächst einige Begriffe näher erläutert: Unter einer Systemkomponente werden Komponenten der Windenergieanlage verstanden, die in dem Turm der Windenergieanlage eingebaut werden, um deren Wartung und Betrieb zu ermöglichen. Dies können beispielsweise Leistungsleitmittel, Signalleitmittel, Leuchtmittel oder eine Steigeinrichtung für Bedienpersonal sein.

Unter einer Oberkante wird die Kante eines Versorgungsmoduls verstanden, die in Einbaulage zur Gondel der Windenergieanlage ausgerichtet ist. Unter einer Unterkante wird die zum Turmfuß gerichtete Kante des Versorgungsmoduls verstanden.

Unter einem oberen Ende des Windenergieanlagenturms wird ein Bereich am oberen Ende des Turms verstanden. Dieser Bereich muss nicht zwingend direkt am höchsten Punkt des Windenergieanlagenturms angeordnet sein. Er kann auch einige Meter unterhalb des höchsten Punkts angeordnet sein. Bei abschnittsweise aus unterschiedlichem Material bestehenden Türmen, beispielsweise ein Betonturm unten und ein aufgesetzter Stahlrohrturm oben, ist jedes obere Ende eines Abschnitts ein "oberes Ende" im Sinne der Erfindung.

Kern der Erfindung ist die Erkenntnis, dass die gesonderten Versorgungsmodule bereits während des Einbringens in den Windenergieanlagenturm miteinander verbunden werden können, bevor sie ggf. in ihrer Gesamtheit an der Turminnenwand befestigt werden. Die Versorgungsmodule werden bei dem Einbringen in das Turminnere von oben eingesetzt, d. h. sie werden am oberen Ende des Windenergieanlagenturms vorbei geführt. Dort wird die Oberkante des zuerst eingebrachten ersten gesonderten Versorgungsmoduls an der Unterkante des als nächstes einzubringenden zweiten gesonderten Versorgungsmoduls angeordnet. Die Segmente der Systemkomponenten der beiden gesonderten Versorgungsmodule werden über die an den Kanten angeordneten Segmentenden miteinander verbunden. Danach werden die nun miteinander verbundenen gesonderten Versorgungsmodule nach unten abgesenkt, bis die Oberkante des zweiten Versorgungsmoduls am oberen Ende des Windenergieanlagenturms angeordnet ist. Der Vorgang wird so lange wiederholt, bis alle zu installierenden Versorgungsmodule in das Turminnere eingebracht wurden. Abschließend erfolgt dann die Befestigung der miteinander verbundenen gesonderten Versorgungsmodule an der Innenwand des Windenergieanlagenturms, nachdem das letzte gesonderte Versorgungsmodul am oberen Ende des Windenergieanlagenturms angeordnet und das komplett zusammengesetzte Versorgungsmodul in die endgültige Installationsposition gebracht wurde.

Die Versorgungsmodule werden also sukzessiv miteinander verbunden und in den Turm abgelassen. Damit können die Verbindungsarbeiten zum Zusammenfügen der Versorgungsmodule an einem zentralen, stationären Arbeitsort durchgeführt werden. Das Installationspersonal braucht nicht mehr die Verbindungsstellen zwischen den Versorgungsmodulen an der Turminnenwand entlang abzuarbeiten, stattdessen wandern sozusagen die zu installierenden Versorgungsmodule an dem stationären Arbeitsort vorbei. Da ohnehin am oberen Ende des Windenergieanlagenturms üblicherweise eine stationäre Arbeitsplattform für das Installationspersonal bereitgestellt wird, ist kein Zusatzaufwand erforderlich. Außerdem bietet diese Arbeitsplattform eine höhere Sicherheit als mobile Arbeitseinrichtungen, die höhenbeweglich an der Turminnenwand anzuordnen wären. Weiter werden durch das Verbinden der Versorgungsmodule vor dem Befestigen am Windenergieanlagenturm fertigungsbedingte Turmtoleranzen umgangen. Die Verbindungen der Segmente der Systemkomponenten am oberen Ende des Windenergieanlagenturms sind immer in einer definierten Position relativ zur Spitze des Turms angeordnet. Die Position des unteren Endes der miteinander verbundenen Versorgungsmodule spielt keine Rolle mehr. Ausgleichsarbeiten brauchen - wenn überhaupt - nur noch am Turmfuß durchgeführt werden. Da die Arbeiten dort nicht in großer Höhe ausgeführt werden, ist die Sicherheit des Installationspersonals einfach zu gewährleisten. Es ist nun nicht mehr nötig, an jeder Verbindungsstelle zwischen den gesonderten Versorgungsmodulen Ausgleichsarbeiten auf Grund der Turmtoleranzen durchzuführen. Dies vereinfacht die Installation der Turmeinbauten in erheblichem Maß.

Weiter wird durch die Befestigung an der Turminnenwand insbesondere eine Verschiebung des Versorgungsmoduls in horizontaler Ebene verhindert. Die gewichtsmäßige Hauptlast des Versorgungsmoduls wird weiterhin durch die Aufhängung am oberen Turmende getragen.

Es ist zweckmäßig eine Arbeitsplattform am oberen Ende des Windenergieanlagenturms vor dem Einbringen der gesonderten Versorgungsmodule bereitzustellen. Damit wird die Sicherheit des Installationspersonals erhöht und die Verbindungsarbeiten zwischen den Versorgungsmodulen werden weiter erleichtert.

Um die Sicherheit während der Verbindungsarbeiten weiter zu erhöhen, ist es vorteilhafterweise vor dem Einbringen der gesonderten Versorgungsmodule in den Windenergieanlagenturm vorgesehen, eine Haltevorrichtung am oberen Ende des Windenergieanlagenturms zum mindestens temporären Aufhängen eines gesonderten Versorgungsmoduls bereitzustellen. Die Haltevorrichtung umfasst mit Vorteil mindestens eine Verbindungseinrichtung zur Verbindung mit einem gesonderten Versorgungsmodul. Weiter weist die Haltevorrichtung zweckmäßigerweise mindestens einen an der Turmwand oder Turmoberkante befestigten Lastbock auf, wobei die Verbindungseinrichtung mindestens einen Schäkel oder ein Hebeband umfasst. Damit kann mit Vorteil das erste gesonderte Versorgungsmodul an das obere Ende des Windenergieanlagenturms aufgehängt werden, bevor die Segmente der Systemkomponenten mit denen des zweiten gesonderten Versorgungsmoduls verbunden werden. Das angehängte Versorgungsmodul wird durch die Halteeinrichtung am oberen Ende des Windenergieanlagenturms fixiert, so dass die Verbindung der Systemkomponentensegmente mit einem über dem angehängten Versorgungsmodul angeordneten Versorgungsmodul weiter vereinfacht wird. Die Ausführung der Halteeinrichtung umfassend einen Lastbock und einen Schäkel oder ein Hebeband ermöglicht eine einfache Verbindung der Oberkante des angehängten Versorgungsmoduls mit der Haltevorrichtung. Dazu kann das Versorgungsmodul eine Tragplatte aufweisen, an der die Verbindungseinrichtungen befestigt werden.

Nach dem Einbringen des letzten gesonderten Versorgungsmoduls kann es mittels des Lastbocks an der Turmwand oder Turmoberkante befestigt werden.

In einer alternativen Ausführungsform kann die Tragplatte als eine abgewinkelte Tragplatte zur Befestigung des letzten gesonderten Versorgungsmoduls an der Turmwand oder Turmoberkante ausgebildet sein. Mit Hilfe der abgewinkelten Tragplatte kann das letzte gesonderte Versorgungsmodul über die Turmoberkante gehängt und an der Turmwand oder Turmoberkante befestigt werden. Damit wird der Befestigungsaufwand für das letzte gesonderte Versorgungsmodul an der Turmwand oder Turmoberkante verringert.

Die Haltevorrichtung kann weiter vorteilhafterweise mindestens ein an der Turmwand oder der Turmoberkante befestigtes Tragelement umfassen, an dem ein Tragmodul umfassend einen Einhängeabschnitt lösbar befestigt ist, wobei das Versorgungsmodul ein Einhängeelement aufweist, mit dem das gesonderte Versorgungsmodul nach dem Anordnen der Oberkante an einem oberen Ende des Windenergieanlagenturms an dem Einhängeabschnitt des Tragmoduls eingehängt wird. Das Tragmodul weist dazu einen Einhängeabschnitt auf, in dem das Einhängeelement angeordnet werden kann. Das Einhängeelement wird von dem Einhängeabschnitt getragen. Mit dem Tragmodul wird ein einfaches Einhängen der gesonderten Versorgungsmodule an dem Tragelement ermöglicht. Damit können die gesonderten Versorgungsmodule unkompliziert an der Oberkante des Windenergieanlagenturms angehängt werden. Bei geeigneter Ausführung der Turmoberkante kann das Tragmodul auch ohne die Verwendung eines Tragelements an der Turmoberkante befestigt werden. Die Versorgungsmodule benötigen zum temporären Aufhängen an der Oberkante des Windenergieanlagenturms keine Befestigung an der Haltevorrichtung mittels der Schäkel. Die Schäkel können wahlweise zur Befestigung der gesonderten Versorgungsmodule nach dem Einbringen des letzten gesonderten Versorgungsmoduls in das Turminnere genutzt werden.

Mit Vorteil ist der Windenergieanlagenturm aus mindestens zwei Turmsegmenten ausgebildet. Weiter ist zweckmäßig, dass die gesonderten Versorgungsmodule mehrere Turmsegmente überspannen. Damit wird eine geringere Anzahl an gesonderten Versorgungsmodulen für den Einbau in das Turminnere benötigt als die Anzahl der Turmsegmente. Dies verringert die Anzahl der erforderlichen Verbindungsarbeiten zwischen den Versorgungsmodulen und vereinfacht und beschleunigt die Installation der Turmeinbauten weiter. Zur Reduzierung der Variantenvielfalt der gesonderten Versorgungsmodule ist es zweckmäßig, sowohl das jeweils unterste und die jeweils zwischenliegenden Versorgungsmodule gleich auszuführen. Über die Anzahl der zu montierenden zwischenliegenden Versorgungsmodule wird eine grobe Anpassung an die jeweilige Turmhöhe erreicht. Die Feinabstimmung auf die letztendlich benötigte Länge des kompletten Versorgungsmoduls wird durch eine Anpassung des obersten gesonderten Versorgungsmoduls erreicht.

Zweckmäßigerweise umfassen die Systemkomponenten Leistungsleitmittel, Signalleitmittel, Leuchtmittel und/oder eine Steigeinrichtung für Bedienpersonal, wobei die Leuchtmittel diskret oder kontinuierlich angeordnete Leuchten umfassen.

Vorteilhafterweise kann ein Stahlrohrturm als oberer Teil des Windenergieanlagenturms installiert werden, wobei der untere Teil ein Betonturm ist. Die Versorgungsmodule werden mit Vorteil vor dem Aufsetzen eines Stahlrohrturms in den Betonturm eingebracht. Im Stahlrohrturm können die Systemkomponenten ab Werk, auf der Baustelle oder nach der Errichtung des Stahlrohrturms installiert werden. Durch den Einbau der Versorgungsmodule gemäß dem erfindungsgemäßen Verfahren vor der Errichtung des Stahlrohrturms wird gewährleistet, dass die Oberkante des zuletzt eingebauten Versorgungsmoduls im Betonturm an definierter Stelle relativ zum oberen Ende des Windenergieanlagenturms anliegt. Damit kann die Kopplung zwischen den im Stahlrohrturm eingebauten Systemkomponenten und den Systemkomponenten des Betonturms ohne besondere Ausgleichsarbeiten erfolgen. Weiter kann eine abgewinkelt ausgebildete Tragplatte eines zuletzt eingebrachten Versorgungsmoduls mit dem Stahlrohrturm verbunden werden, um ein Abrutschen der Tragplatte von einer Turmoberkante eines Betonturms zu verhindern.

Es ist weiter vorteilhaft, vor dem Einbringen der gesonderten Versorgungsmodule in den Windenergieanlagenturm, an mindestens einem der gesonderten Versorgungsmodule mindestens eine Befestigungsvorrichtung zu befestigen, die ein mit dem Versorgungsmodul verbundenes Klemmelement und ein zwischen dem Klemmelement und dem Versorgungsmodul angeordnetes Führungselement umfassend ein seitlich am Versorgungsmodul hervorragendes Befestigungsstück aufweist. Unter seitlich am Versorgungsmodul hervorragend wird verstanden, dass das Befestigungsstück bei einem an der Turminnenwand hängenden Versorgungsmodul entlang der Wand verläuft und das Versorgungsmodul das Befestigungsstück nicht überdeckt.

Die Befestigungsvorrichtungen können damit zusammen mit den Versorgungsmodulen in das Turminnere eingebracht werden, was den Einbau der gesonderten Versorgungsmodule weiter vereinfacht. Das Führungselement ist dabei in vertikaler Richtung entlang des gesonderten Versorgungsmoduls beweglich, so dass es flexibel entlang des gesonderten Versorgungsmoduls angeordnet werden kann.

Dabei ist weiter mit Vorteil vorgesehen, nach dem Einbringen eines letzten gesonderten Versorgungsmoduls, die Befestigungsvorrichtung mittels des Befestigungsstücks an der Turmwand des Windenergieanlagenturms zu befestigen, und das Führungselement mittels des Klemmelements an dem Versorgungsmodul zu verklemmen. Alternativ zum Klemmelement kann auch ein Verriegelungselement vorgesehen werden, welches das Führungselement an dem Versorgungsmodul lösbar befestigt und dabei verriegelt.

Die Befestigungsstücke sind durch ihr seitliches Hervorragen von den Versorgungsmodulen direkt von vorne zu erreichen. Das Installationspersonal kann die Befestigungsstücke damit einfach erreichen und die Befestigung der in das Turminnere eingebrachten Versorgungsmodule unkompliziert durchführen. Durch die Befestigung der Befestigungsstücke an der Turmwand wird eine Fixierung der Versorgungsmodule in horizontaler Richtung bewirkt. Eine vertikale Verschiebung zum Ausrichten der Versorgungsmodule ist bis zur Verklemmung des Führungselements der Befestigungsvorrichtung mittels des Klemmelements weiter ermöglicht. Zur Fixierung der gesonderten Versorgungsmodule in vertikaler Richtung wird das Führungselement zwischen dem Klemmelement und dem gesonderten Versorgungsmodul eingeklemmt. Die Verklemmung kann durch Befestigungselemente bewirkt werden, die das Klemmelement an das Versorgungsmodul drücken. Die Befestigungselemente können dabei von der Vorderseite des Versorgungsmoduls betätigt werden. Damit kann das Versorgungsmodul nicht weiter entlang des Führungselements bewegt werden.

Zur Erläuterung wird auf die vorstehende Beschreibung verwiesen.

Nachfolgend wird die Erfindung unter Bezugnahme auf die beigefügte Zeichnung näher erläutert, in der eine vorteilhafte Ausführungsform dargestellt wird. Es zeigen:

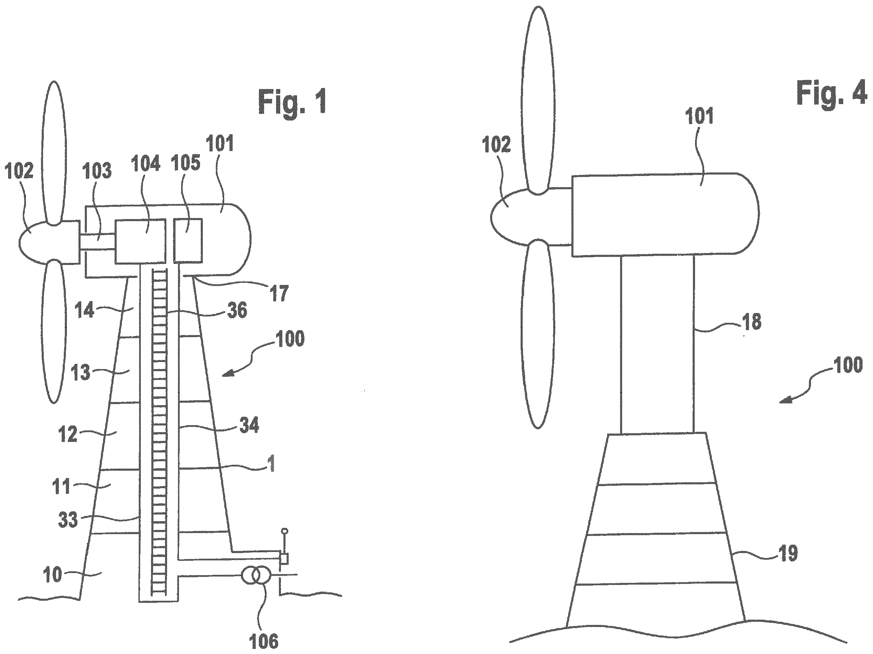

- Fig. 1:: eine schematische Darstellung einer Windenergieanlage mit Turmeinbauten;
- Fig. 2a-d:: eine schematische Darstellung einzelner Verfahrensschritte;
- Fig. 3a, b:: eine schematische Darstellung der an einer Haltevorrichtung im Turminneren aufgehängten Versorgungsmodule mit (a) Schäkeln und (b) Hebebändern;
- Fig. 4:: eine schematische Darstellung eines Hybridturms;

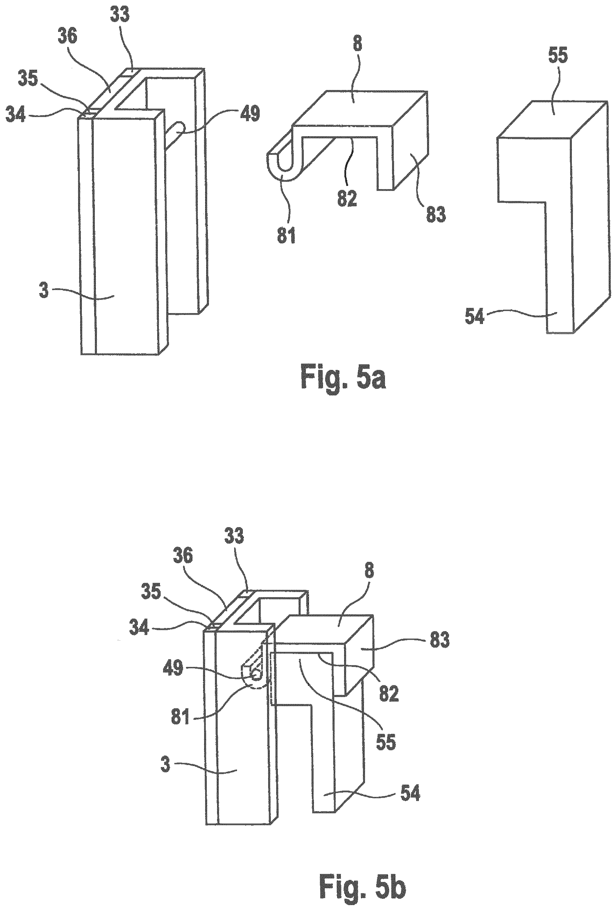

- Fig. 5a, b:: eine schematische Darstellung eines Versorgungsmoduls, eines Tragmoduls und eines Tragelements im getrennten (a) und eingehängten Zustand (b);

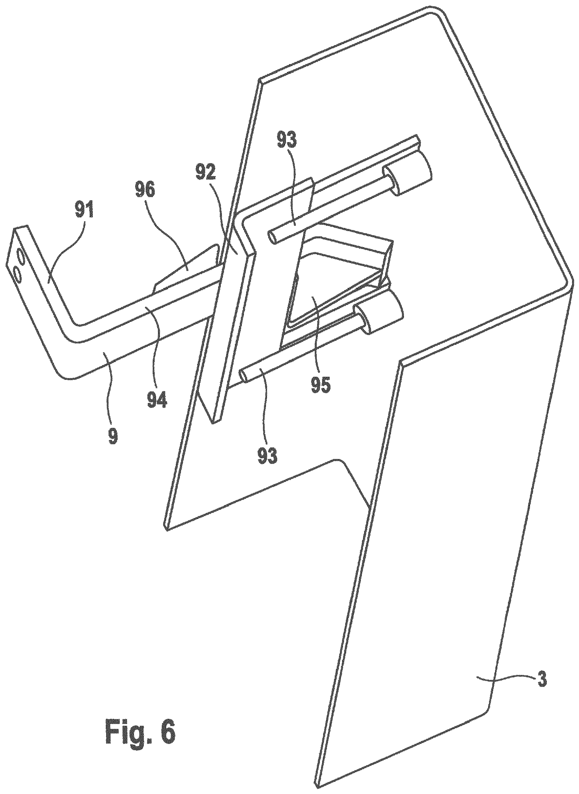

- Fig. 6:: eine schematische Darstellung einer an einem Versorgungsmodul angeordneten Befestigungsvorrichtung;

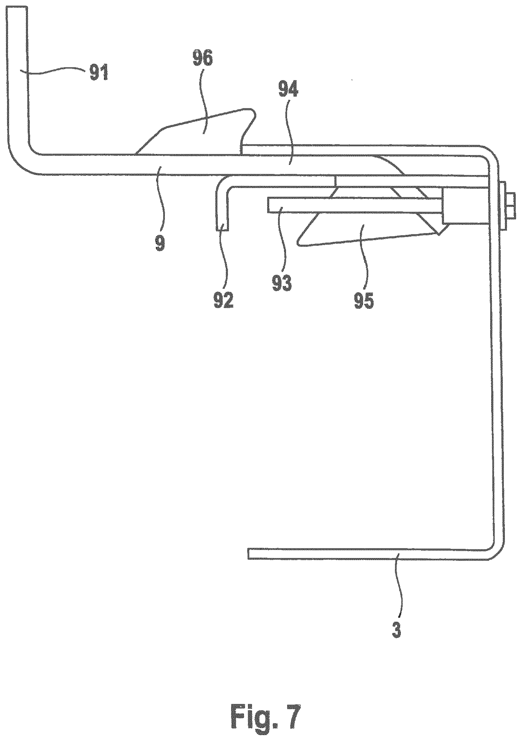

- Fig. 7:: eine schematische Querschnittsansicht einer an einem Versorgungsmodul angeordneten Befestigungsvorrichtung; und
- Fig. 8:: eine schematische Darstellung des letzten an einer abgewinkelten Tragplatte befestigten Versorgungsmoduls.

Das Verfahren wird bei der Errichtung einer Windenergieanlage, in ihrer Gesamtheit mit der Referenznummer 100 bezeichnet, durchgeführt. Die Windenergieanlage 100 umfasst einen aus mehreren Turmsegmenten 10, 11, 12, 13, 14, 15, 16 errichteten Windenergieanlagenturm 1, der als Hybridturm ausgeführt ist. Das untere Teil des Hybridturms ist ein Betonturm 19 und das obere ein Stahlrohrturm 18. Weiter umfasst die Windenergieanlage 100 eine Gondel 101, die mit einem oberen Ende 17 des Windenergieanlagenturms 1 verbunden ist, sowie einen an einer Seite der Gondel 101 drehbar gelagerten Rotor 102. Der Rotor 102 ist über eine Welle 103 mit einem elektrischen Generator 104 verbunden. Weiter umfasst die Windenergieanlage 100 eine Betriebssteuerung 105, die über Signalleitungen mit dem Generator 104 und dem Rotor 102 verbunden ist. Die Betriebssteuerung 105 und der Generator 104 sind in der Gondel 101 angeordnet. Weiter umfasst die Windenergieanlage 100 am Fuß des Windenergieanlagenturms 1 einen Transformator 106 zum Anschluss an das elektrische Netz. Der Generator 104 und der Transformator 106 sind über Leistungsleitmittel 33 zur Übertragung der vom Generator 104 erzeugten Leistung an das Netz verbunden.

Weiter ist im Inneren des Windenergieanlagenturms 1 eine Leuchtmittel 35 umfassende Steigeinrichtung 36 für Bedienpersonal an der Turminnenwand befestigt, wobei die Leuchtmittel diskret oder kontinuierlich angeordnete Leuchten umfassen. Zur Ansteuerung der Betriebssteuerung 105 sind Signalleitmittel 34 im Turminneren vorgesehen. Die Leistungsleitmittel 33, Signalleitmittel 34, Leuchtmittel 35 und die Steigeinrichtung 36 für Bedienpersonal werden zusammenfassend als Systemkomponenten 33, 34, 35, 36 bezeichnet.

Die Systemkomponenten 33, 34, 35, 36 sind jeweils in einzelne Segmente unterteilt. Die Segmente mindestens zwei verschiedener Systemkomponenten 33, 34, 35, 36 sind zu einem gesonderten Versorgungsmodul 3, 4 baulich zusammengefasst. Die bauliche Zusammenfassung vereinfacht den Einbau der Versorgungsmodule 3, 4 nach der Errichtung des Windenergieanlagenturms 1. Die Versorgungsmodule 3, 4 weisen je eine Oberkante 37, 47 und eine Unterkante 38, 48 auf. An der Oberkante 37, 47 ist das obere Segmentende 30, 40 der Systemkomponenten 33, 34, 35, 36 angeordnet. Dementsprechend ist das untere Segmentende 31, 41 der Systemkomponenten 33, 34, 35, 36 an der Unterkante 38, 48 des gesonderten Versorgungsmoduls 3, 4 angeordnet.

Die gesonderten Versorgungsmodule 3, 4 können in einer ersten bevorzugten Ausführungsform im Werk vormontiert werden. Alternativ können die gesonderten Versorgungsmodule 3, 4 in einer zweiten bevorzugten Ausführungsform auf der Baustelle zusammengebaut werden. Das Vormontieren der Versorgungsmodule kann in horizontaler Lage erfolgen.

Der Windenergieanlagenturm 1 wird aus den Turmsegmenten 10 bis 16 errichtet. Am oberen Ende 17 des Windenergieanlagenturms 1 wird nach der Errichtung eine Arbeitsplattform 6 installiert. Die Arbeitsplattform 6 dient dem Installationspersonal zum Aufenthalt während der Errichtungs- und Installationsarbeiten am Windenergieanlagenturm 1. Darüber hinaus kann die Arbeitsplattform für spätere Wartungsarbeiten, insbesondere am Übergangsstück zum Hybridturm genutzt werden. Die Arbeitsplattform 6 kann Geländer und Ösen für Sicherungsleinen aufweisen.

Die Arbeitsplattform 6 kann sich über den gesamten Turminnendurchmesser erstrecken und einen geeigneten Ausschnitt für die Systemkomponenten aufweisen. Die gesonderten Versorgungsmodule werden dann durch den Ausschnitt in der Arbeitsplattform 6 nach unten geführt. Einzelne Versorgungsmodule können mit zusätzlichen Komponenten (bspw. Einspeisekästen) versehen sein, wodurch sich der Querschnitt der Versorgungsmodule vergrößert. Um auch den Einbau dieser gesonderten Versorgungsmodule zu ermöglichen, kann die Arbeitsplattform 6 mit einer Bodenklappe ausgestattet sein, wodurch der Ausschnitt in der Arbeitsplattform zur Passage dieser zusätzlichen Komponenten temporär vergrößert werden kann.

Weiter wird zur Vorbereitung des Einbaus der gesonderten Versorgungsmodule 3, 4 eine Halteeinrichtung 5 am oberen Ende 17 des Windenergieanlagenturms 1 befestigt. Die Halteeinrichtung 5 umfasst in einer ersten Ausführungsform zwei Verbindungseinrichtungen 51, 52 zur Verbindung mit einem gesonderten Versorgungsmodul 3, 4. Eine Verbindungseinrichtung 51, 52 ist aus zwei miteinander gekoppelten Schäkeln ausgebildet, die an einem an der Turmwand befestigten Lastbock 53 befestigt sind. An den Schäkeln kann ein Versorgungsmodul 3, 4 mittels einer Tragplatte 54 aufgehängt werden, die dazu Ösen 39 aufweist. Die Halteeinrichtung 5 ist dabei so ausgeführt, dass sie mit dem Gesamtgewicht aller einzubauenden gesonderten Versorgungsmodule 3, 4 belastet werden kann.

In einer zweiten alternativen Ausführungsform kann die Tragplatte 54 jedoch auch als Winkel ausgeführt und zum temporären Aufhängen eines gesonderten Versorgungsmoduls 3, 4 direkt über die Turmoberkante gehängt werden. Die Tragplatte 54 wird dann an der Turmoberkante beispielsweise durch Schrauben befestigt. Zusätzlich können Passschrauben als Abrutschsicherung vorgesehen werden.

Weiter ist in einer dritten Ausführungsform an der Haltevorrichtung 5 ein Tragelement 55 vorgesehen, an dem ein Tragmodul 8 eingehängt werden kann. Das Tragmodul 8 weist dazu einen zum Tragelement 55 komplementär ausgebildeten Auflageabschnitt 82 auf, der von einem Flansch 83 umrandet wird. Der Auflageabschnitt 82 wird auf dem Tragelement 55 angeordnet. Mittels des Flansches 83 wird das Tragmodul 8 gegen Verschiebung von dem Tragelement 55 gesichert. Das Tragmodul 8 weist weiter einen Einhängeabschnitt 81 auf. In den Einhängeabschnitt 81 kann ein an dem gesonderten Versorgungsmodul 3, 4 befestigtes Einhängeelement 49 angeordnet werden. Damit wird ermöglicht, die gesonderten Versorgungsmodule 3, 4 nach dem Einbringen in den Windenergieanlagenturm 1 unkompliziert an dem Tragmodul 8 aufzuhängen. Bei geeigneter Ausführung der Turmoberkante kann das Tragmodul 8 auch ohne die Verwendung eines Tragelements 55 an der Turmoberkante befestigt werden.

Durch die Verwendung von Hebebändern kann das Aufhängen der Versorgungsmodule 3, 4 an dem Tragmodul 8 weiter vereinfacht werden. Das letzte in den Windenergieanlagenturm 1 eingebrachte gesonderte Versorgungsmodul 4 kann nach dem Entfernen des Tragmoduls 8 zur Befestigung mit der Haltevorrichtung 5 an den Schäkeln oder direkt über eine abgewinkelte Tragplatte 54 an der Turmoberkante befestigt werden. Zur endgültigen Befestigung der gesonderten Versorgungsmodule 3, 4 an der Turminnenwand 7 ist eine Befestigungsvorrichtung 9 vorgesehen. Die Befestigungsvorrichtung 9 umfasst ein Klemmelement 92, das mittels Befestigungselementen 93 an dem Versorgungsmodul 3, 4 befestigt wird. Die Befestigungselemente 93 sind von der Vorderseite der gesonderten Versorgungsmodule 3, 4 erreichbar und können von dort betätigt werden. Zwischen dem Klemmelement 92 und dem Versorgungsmodul 3, 4 ist ein Führungselement 94 vorgesehen. Das Führungselement 94 weist weiter Abstandshalter 95, 96 und ein Befestigungsstück 91 auf. Das Befestigungsstück 91 ragt seitlich von dem Versorgungsmodul hervor. Es kann zur Verbindung mit der Turmwand von dem Installationspersonal einfach erreicht werden. Der Abstandshalter 96 beabstandet das gesonderte Versorgungsmodul 3, 4 von der Wand. Der Abstandshalter 95 fungiert weiter als Auflageelement und Führungselement für das Klemmelement 92.

Durch die Betätigung der Befestigungselemente 93 wird das Klemmelement 92 an das gesonderte Versorgungsmodul 3, 4 gedrückt. Dabei drückt das Klemmelement 92 über den Abstandshalter 95 auf das Führungselement 94. Das Führungselement 94 wird dadurch zwischen dem Klemmelement 92 und dem gesonderten Versorgungsmodul 3, 4 eingeklemmt.

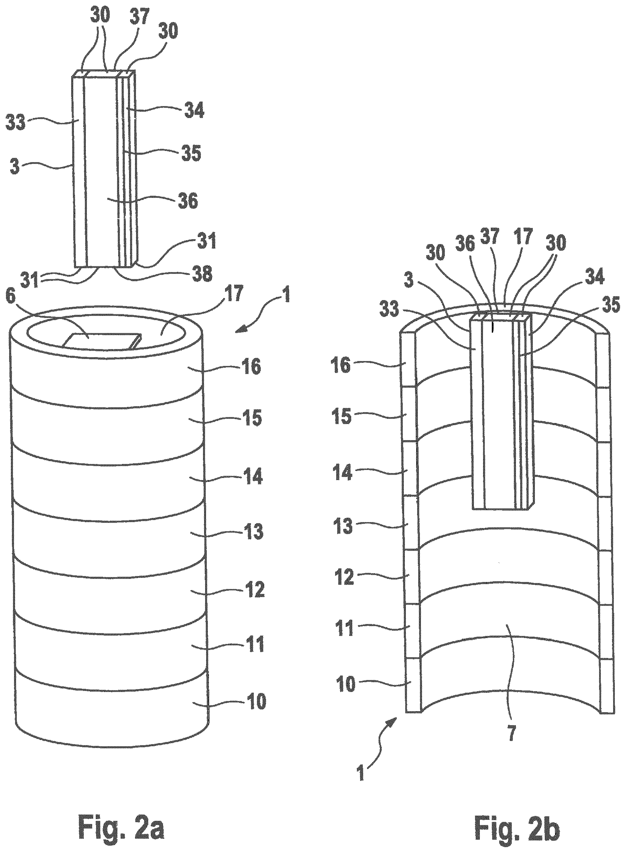

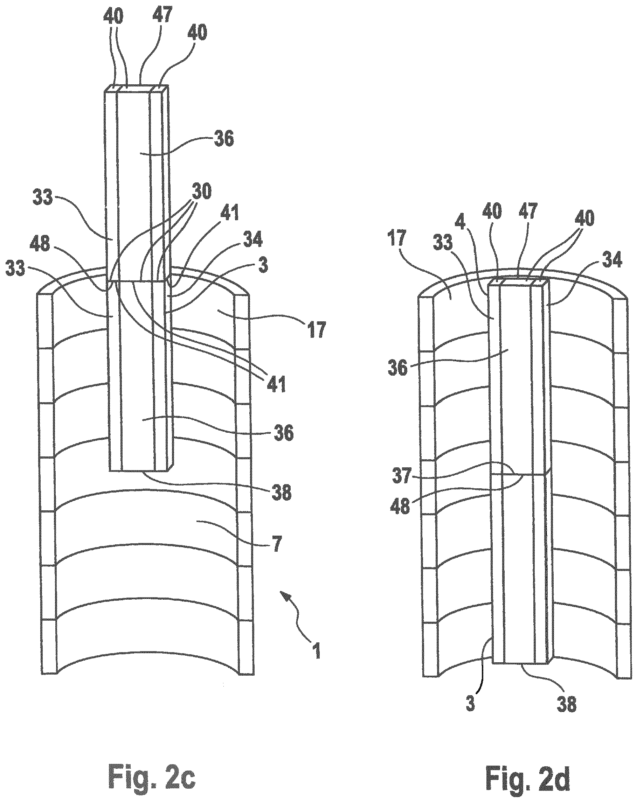

In Fig. 2a wird ein Windenergieanlagenturm 1 mit einer Arbeitsplattform 6 an seinem oberen Ende 17 dargestellt, der aus den Turmsegmenten 10 bis 16 errichtet wurde. Die Turmsegmente 10 bis 16 bilden einen Betonturm 19, der in dieser bevorzugten Ausführungsform als unterer Teil eines Hybridturms fungiert.

Zum Einbringen der Versorgungsmodule in den Windenergieanlagenturm 1 wird die Halteeinrichtung 5 an dem oberen Ende des Windenergieanlagenturms 1 installiert. Auf die Halteeinrichtung 5 wird ein Tragmodul 8 aufgesetzt.

Zum Einbau der Systemkomponenten wird ein erstes gesondertes Versorgungsmodul 3, das im fertig gebauten Zustand der Windenergieanlage 100 am Fuß des Windenergieanlagenturms 1 angeordnet ist, mit einem Kran (nicht dargestellt) an das obere Ende 17 des Windenergieanlagenturmes 1 angeordnet. Die Führungselemente 94 der an dem gesonderten Versorgungsmodul 3 befestigten Befestigungsvorrichtungen 9 sind dabei noch frei und können entlang des Versorgungsmoduls 3 in vertikaler Richtung bewegt werden.

Das Installationspersonal auf der Arbeitsplattform 6 führt das erste gesonderte Versorgungsmodul 3 beim darauffolgenden Absenken in das Innere des Windenergieanlagenturms 1.

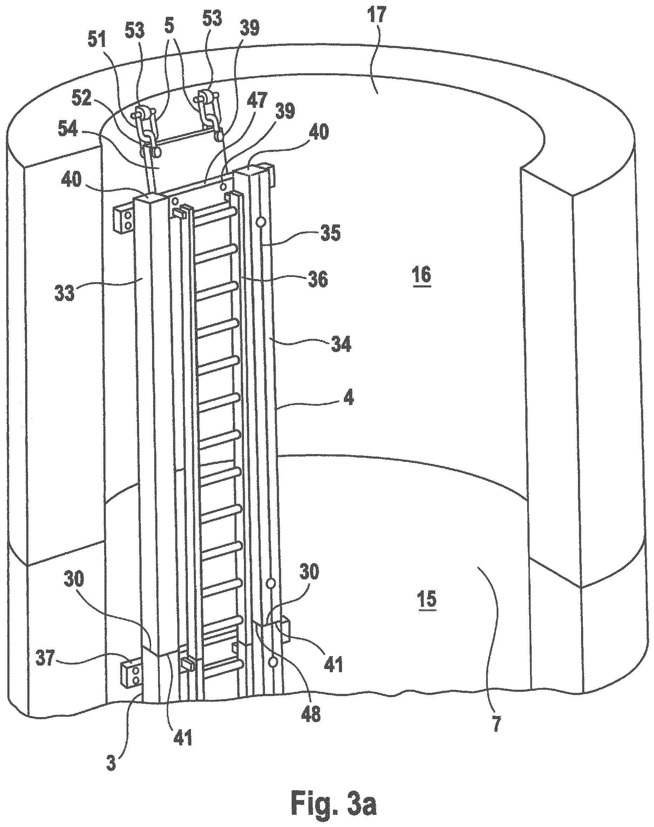

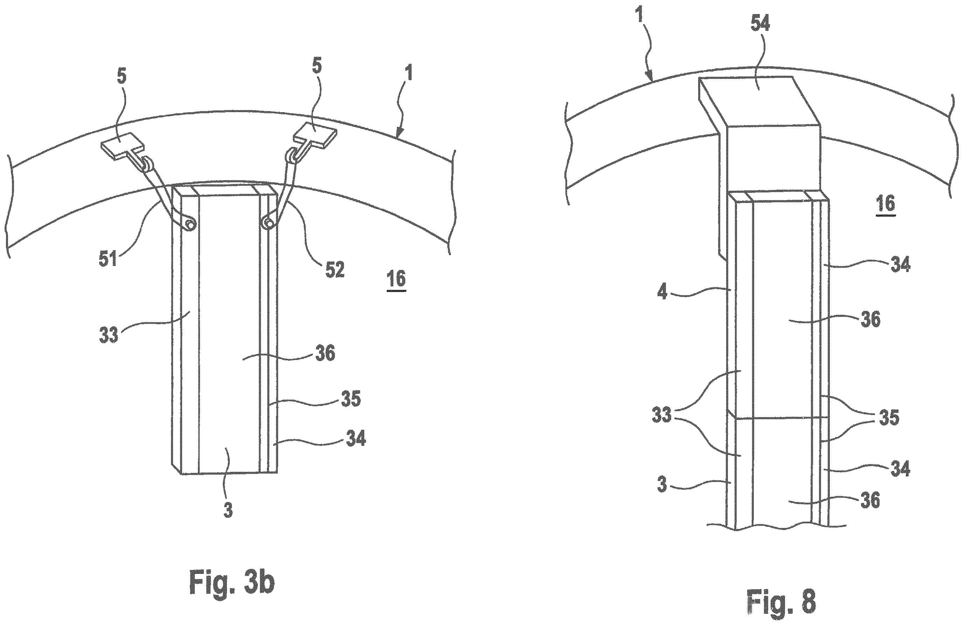

Zur besseren Übersicht sind in den Figuren 2b, 2c, 2d, 3a, 3b und 8 die das Turminnere verdeckenden Wandabschnitte weggelassen, so dass die Turminnenwand 7 sichtbar ist.

Das erste gesonderte Versorgungsmodul 3 wird so weit in das Turminnere abgesenkt, bis die Oberkante 37 des Versorgungsmoduls 3 an dem oberen Ende 17 des Windenergieanlagenturms 1 angeordnet ist. Gleichzeitig ist die Oberkante 37 so an der Arbeitsplattform 6 angeordnet, dass das Installationspersonal von der Arbeitsplattform aus Arbeiten an der Oberkante 37 durchführen kann. Das erste gesonderte Versorgungsmodul 3 wird mittels des Einhängelements 49 an den Einhängeabschnitt 81 des Tragmoduls 8 an die Halteeinrichtung 5 angehängt. Das erste gesonderte Versorgungsmodul 3 wird dann von dem Kran gelöst und hängt mit seinem vollen Gewicht an der Halteeinrichtung 5. Weiter sind die oberen Segmentenden 30 der Systemkomponenten 33, 34, 35, 36 ebenfalls an dem oberen Ende 17 des Windenergieanlagenturms 1 angeordnet. Das erste gesonderte Versorgungsmodul 3 überspannt mehrere der Turmsegmente 10 bis 16. D. h. die Oberkante 37 des ersten gesonderten Versorgungsmoduls 3 ist an einem anderen Turmsegment 10 bis 16 angeordnet als die Unterkante 38 des ersten gesonderten Versorgungsmoduls 3.

Das zweite gesonderte Versorgungsmodul 4 wird in einem weiteren Schritt mit dem Kran angehoben und mit seiner Unterkante 48 an der Oberkante 37 des ersten gesonderten Versorgungsmoduls 3 angeordnet. Die unteren Segmentenden 41 der Systemkomponenten 33, 34, 35, 36 des zweiten gesonderten Versorgungsmoduls 4 werden zu den oberen Segmentenden 30 der Systemkomponenten 33, 34, 35, 36 des ersten gesonderten Versorgungsmoduls 3 ausgerichtet. Nach der Ausrichtung werden die oberen Segmentenden 30 mit den unteren Segmentenden 41 durch das Installationspersonal verbunden. Dies kann das Installationspersonal von der Arbeitsplattform 6 aus durchführen. Nach der Verbindung der oberen Segmentenden 30 und der unteren Segmentenden 41 sind das erste gesonderte Versorgungsmodul 3 und das zweite gesonderte Versorgungsmodul 4 miteinander verbunden.

Nach dem Verbinden des ersten und zweiten gesonderten Versorgungsmoduls 3, 4 wird die Halteeinrichtung 5 von dem ersten gesonderten Versorgungsmodul 3 gelöst. Das Versorgungsmodul 3 wird von dem Tragmodul 8 ausgehängt. Die miteinander verbundenen gesonderten Versorgungsmodule 3, 4 werden mit dem Kran weiter in das Turminnere abgesenkt, bis die Oberkante 47 des zweiten gesonderten Versorgungsmoduls 4 an dem oberen Ende 17 des Windenergieanlagenturms 1 angeordnet ist. Das zweite gesonderte Versorgungsmodul 4 wird danach mittels des an dem gesonderten Versorgungsmodul 4 befestigten Einhängeelements 49 und des Tragmoduls 8 an der Halteeinrichtung 5 angehängt und von dem Kran gelöst. In einer alternativen Ausführungsform wird das Versorgungsmodul mittels Hebebändern der Halteeinrichtung 5 angehängt. Die obengenannten Schritte werden für alle bis auf das letzte der einzubauenden gesonderten Versorgungsmodule wiederholt. Das letzte gesonderte Versorgungsmodul wird in einer ersten Ausführungsform über die Verbindungseinrichtungen 52 mit der Halteeinrichtung 5 befestigt. Dazu werden die Verbindungseinrichtungen 52 durch die Halteösen 39 der Tragplatte 54 des letzten gesonderten Versorgungsmoduls geführt und verriegelt.

In einer alternativen Ausführungsform ist die Tragplatte 54 des letzten gesonderten Versorgungsmoduls abgewinkelt ausgebildet. Das letzte gesonderte Versorgungsmodul kann mit Hilfe der abgewinkelten Tragplatte 54 über die Turmoberkante gehängt und dort mit Schrauben befestigt werden. Weiter kann die abgewinkelte Tragplatte 54 an einem auf den Betonturm 19 aufzusetzenden Stahlrohrturm 18 befestigt werden.

Das erste gesonderte Versorgungsmodul 3 ist nach dem Einbringen aller weiteren gesonderten Versorgungsmodule 4 in das Turminnere am Turmfuß angeordnet und bildet das unterste gesonderte Versorgungsmodul. Nach dem Verbinden und Absenken der gesonderten Versorgungsmodule 3, 4 hängt das komplette Versorgungsmodul an der Halteeinrichtung 5. In einem weiteren Schritt werden die gesonderten Versorgungsmodule 3, 4 mit der Turminnenwand 7 verbunden, indem die Befestigungsstücke 91 an der Turminnenwand 7 befestigt werden. Weiter werden die Befestigungselemente 93 betätigt, so dass die Versorgungsmodule 3, 4 über die Klemmelemente 92 und die Führungselemente 94 an die Turminnenwand 7 gezogen werden. Mittels der Verbindung mit der Turminnenwand über die Befestigungseinrichtung 9 wird insbesondere eine Verschiebung des Versorgungsmoduls in horizontaler Ebene verhindert. Die Hauptlast des Versorgungsmoduls hängt an der Halteeinrichtung 5.

Nach dem Einbau der Versorgungsmodule in den Betonturm 19 wird ein Stahlrohrturm 18 auf den Betonturm 19 aufgesetzt. Die im Stahlrohrturm 18 eingebauten Systemkomponenten 33, 34, 35, 36 werden mit den oberen Segmentenden 40 verbunden. Die unteren Segmentenden 31 des ersten gesonderten Versorgungsmoduls 3 werden ggf. ebenfalls mit den im Turmfuß verbauten Systemkomponenten 33, 34, 35, 36 verbunden.

## Patentansprüche

1. Verfahren zur Montage von Turmeinbauten durch Einbringen von mindestens zwei gesonderten Versorgungsmodulen (3, 4) in einen Windenergieanlagenturm (1), wobei ein gesondertes Versorgungsmodul (3, 4) je ein Segment von mindestens zwei Systemkomponenten (33, 34, 35, 36) des Windenergieanlagenturms (1) baulich zusammenfasst und wobei ein oberes Segmentende (30, 40) an einer Oberkante (37, 47) und ein unteres Segmentende (31, 41) an einer Unterkante (38, 48) des Versorgungsmoduls (3, 4) angeordnet ist, umfassend die Schritte:
Anordnen der Oberkante (37, 47) eines ersten gesonderten Versorgungsmoduls (3) an einem oberen Ende (17) des Windenergieanlagenturms (1);
Verbinden eines oberen Segmentendes (30) des ersten gesonderten Versorgungsmoduls (3) mit einem unteren Segmentende (41) einer entsprechenden Systemkomponente (33, 34, 35, 36) eines zweiten gesonderten Versorgungsmoduls (4); und
Anordnen der Oberkante (47) des zweiten gesonderten Versorgungsmoduls (4) an dem oberen Ende (17) des Windenergieanlagenturms (1).

2. Verfahren nach Anspruch 1,
**gekennzeichnet durch**
Bereitstellen einer Arbeitsplattform (6) am oberen Ende (17) des Windenergieanlagenturms (1) vor dem Einbringen der gesonderten Versorgungsmodule (3, 4).

3. Verfahren nach einem der vorangegangenen Ansprüche,
**dadurch gekennzeichnet, dass**
vor dem Einbringen der gesonderten Versorgungsmodule (3, 4) in den Windenergieanlagenturm (1) eine Haltevorrichtung (5) am oberen Ende (17) des Windenergieanlagenturms (1) bereitgestellt wird zum mindestens temporären Aufhängen eines gesonderten Versorgungsmoduls (3, 4), wobei die Haltevorrichtung (5) vorzugsweise mindestens eine Verbindungseinrichtung (51, 52) zur Verbindung mit einem gesonderten Versorgungsmodul (3, 4) umfasst.

4. Verfahren nach Anspruch 3,
**dadurch gekennzeichnet, dass**
die Haltevorrichtung (5) mindestens einen an der Turmwand oder Turmoberkante befestigten Lastbock (53) aufweist, an dem nach dem Einbringen des letzten gesonderten Versorgungsmoduls das letzte gesonderte Versorgungsmodul befestigt wird.

5. Verfahren nach einem der Ansprüche 3 bis 4,
**dadurch gekennzeichnet, dass**
nach dem Einbringen des letzten Versorgungsmoduls das letzte gesonderte Versorgungsmodul mit Hilfe mindestens einer abgewinkelten Tragplatte (54) über die Turmoberkante gehängt und an der Turmwand oder Turmoberkante befestigt wird.

6. Verfahren nach einem der Ansprüche 3 bis 5,
**dadurch gekennzeichnet, dass**
die Verbindungseinrichtung (51, 52) mindestens einen Schäkel und/oder mindestens ein Hebeband umfasst.

7. Verfahren nach einem der Ansprüche 3 bis 6,
**dadurch gekennzeichnet, dass**
die Haltevorrichtung (5) mindestens ein an der Turmwand befestigtes Tragelement (55) umfasst, an dem ein Tragmodul (8) umfassend ein Einhängeabschnitt (81) lösbar befestigt ist, wobei das Versorgungsmodul (3) ein Einhängeelement (49) aufweist, mit dem das gesonderte Versorgungsmodul (3) nach dem Anordnen der Oberkante (37, 47) an einem oberen Ende (17) des Windenergieanlagenturms (1) an dem Einhängeabschnitt (81) des Tragmoduls (8) eingehängt wird.

8. Verfahren nach einem der Ansprüche 3 bis 7,
**gekennzeichnet durch**
Aufhängen des ersten gesonderten Versorgungsmoduls (3) an das obere Ende (17) des Windenergieanlagenturms (1) vor dem Verbinden der Segmente der Systemkomponenten (33, 34, 35, 36) des ersten und zweiten gesonderten Versorgungsmoduls (4).

9. Verfahren nach einem der vorangegangenen Ansprüche,
**gekennzeichnet durch**
Ausbilden des Windenergieanlagenturms (1) aus mindestens zwei Turmsegmenten (10, 11, 12, 13, 14, 15, 16), wobei die gesonderten Versorgungsmodule (3, 4) vorzugsweise mehrere Turmsegmente (10, 11, 12, 13, 14, 15, 16) überspannen.

10. Verfahren nach einen der vorangegangenen Ansprüche,
**dadurch gekennzeichnet, dass**
die Systemkomponenten (33, 34, 35, 36) Leistungsleitmittel (33), Signalleitmittel (34), Leuchtmittel (35) und/oder eine Steigeinrichtung (36) für Bedienpersonal umfassen.

11. Verfahren nach einem der vorangegangenen Ansprüche,
**gekennzeichnet durch**
Installieren eines Stahlrohrturms (18) als oberen Teil des Windenergieanlagenturms (1), wobei der untere Teil ein Betonturm (19) ist; und
Einbringen der Versorgungsmodule (3, 4) in den Betonturm (19) vor dem Aufsetzen eines Stahlrohrturms (18).

12. Verfahren nach einem der vorangegangenen Ansprüche,
**dadurch gekennzeichnet, dass**
vor dem Einbringen der gesonderten Versorgungsmodule (3, 4) in den Windenergieanlagenturm (1) an mindestens einem der gesonderten Versorgungsmodule (3, 4) mindestens eine Befestigungsvorrichtung (9) befestigt wird, die ein mit dem Versorgungsmodul (3, 4) verbundenes Klemmelement (92) und ein zwischen dem Klemmelement (92) und dem Versorgungsmodul (3, 4) angeordnetes Führungselement (94) umfassend ein seitlich am Versorgungsmodul (3, 4) hervorragendes Befestigungsstück (91) aufweist.

13. Verfahren nach Anspruch 12,
**dadurch gekennzeichnet, dass**
nach dem Einbringen eines letzten gesonderten Versorgungsmoduls (3, 4) die Befestigungsvorrichtung (9) mittels des Befestigungsstücks (91) an der Turmwand des Windenergieanlagenturms (1) befestigt wird; und
das Führungselement (94) mittels des Klemmelements (92) an dem Versorgungsmodul (3, 4) verklemmt wird.

## Claims

1. Method for installing tower fittings by introducing at least two separate supply modules (3, 4) into a wind turbine tower (1), wherein a separate supply module (3, 4) structurally comprises one segment each of at least two system components (33, 34, 35, 36) of the wind turbine tower (1), and wherein an upper segment end (30, 40) is arranged on an upper edge (37, 47), and a lower segment end (31, 41) on a lower edge (38, 48), of the supply module (3, 4), comprising the following steps:
arranging the upper edge (37, 47) of a first separate supply module (3) at an upper end (17) of the wind turbine tower (1);
connecting an upper segment end (30) of the first separate supply module (3) to a lower segment end (41) of a corresponding system component (33, 34, 35, 36) of a second separate supply module (4); and arranging the upper edge (47) of the second separate supply module (4) at the upper end (17) of the wind turbine tower (1).

2. Method according to Claim 1, **characterized by** providing a working platform (6) at the upper end (17) of the wind turbine tower (1) prior to the introduction of the separate supply modules (3, 4).

3. Method according to either of the preceding claims, **characterized in that**,
prior to the introduction of the separate supply modules (3, 4) into the wind turbine tower (1), a holding apparatus (5) preferably is provided at the upper end (17) of the wind turbine tower (1) for the at least temporary suspension of a separate supply module (3, 4), wherein the holding apparatus (5) preferably comprises at least one connecting device (51, 52) for the connection to the separate supply module (3, 4).

4. Method according to Claim 3, characterized the holding apparatus (5) has at least one load ring (53) which is fastened to the tower wall or tower upper edge and to which, after the introduction of the final separate supply module, the final separate supply module is fastened.

5. Method according to either of Claims 3 and 4, **characterized in that**,
after the introduction of the final supply module, the final separate supply module is hung over the tower upper edge with the aid of at least one angled support plate (54) and is fastened to the tower wall or tower upper edge.

6. Method according to one of Claims 3 to 5, **characterized in that**
the connecting device (51, 52) comprises at least one shackle and/or at least one lifting sling.

7. Method according to one of Claims 3 to 6, **characterized in that**
the holding apparatus (5) comprises at least one support element (55) which is fastened to the tower wall and to which a support module (8) comprising a mounting portion (81) is releasably fastened, wherein the supply module (3) has a mounting element (49) with which the separate supply module (3), after the arrangement of the upper edge (37, 47) at an upper end (17) of the wind turbine tower (1), is mounted on the mounting portion (81) of the support module (8).

8. Method according to one of Claims 3 to 7, **characterized by**
suspending the first separate supply module (3) at the upper end (17) of the wind turbine tower (1) prior to the connection of the segments of the system components (33, 34, 35, 36) of the first and second separate supply module (4).

9. Method according to one of the preceding claims, **characterized by**
forming the wind turbine tower (1) from at least two tower segments (10, 11, 12, 13, 14, 15, 16), wherein the separate supply modules (3, 4) preferably span a plurality of tower segments (10, 11, 12, 13, 14, 15, 16).

10. Method according to one of the preceding claims, **characterized in that**
the system components (33, 34, 35, 36) comprise power conduction means (33), signal conduction means (34), illuminating means (35) and/or a climbing device (36) for operating personnel.

11. Method according to one of the preceding claims, **characterized by**
installing a tubular steel tower (18) as an upper part of the wind turbine tower (1), wherein the lower part is a concrete tower (19); and
introducing the supply modules (3, 4) into the concrete tower (19) prior to the placing-on of a tubular steel tower (18).

12. Method according to one of the preceding claims, **characterized in that**,
prior to the introduction of the separate supply modules (3, 4) into the wind turbine tower (1), at least one fastening apparatus (9) is fastened to at least one of the separate supply modules (3, 4), said fastening apparatus having a clamping element (92) which is connected to the supply module (3, 4) and a guide element (94), comprising a fastening piece (91) projecting laterally on the supply module (3, 4), which is arranged between the clamping element (92) and the supply module (3, 4).

13. Method according to Claim 12, **characterized in that**, after the introduction of a final separate supply module (3, 4), the fastening apparatus (9) is fastened to the tower wall of the wind turbine tower (1) by means of the fastening piece (91); and
the guide element (94) is clamped to the supply module (3, 4) by means of the clamping element (92).

## Revendications

1. Procédé de montage d'équipements d'une tour par introduction d'au moins deux modules d'alimentation séparés (3, 4) dans une tour d'éolienne (1), dans lequel un module d'alimentation séparé (3, 4) réunit chaque fois par construction un segment d'au moins deux composants du système (33, 34, 35, 36) de la tour d'éolienne (1) et dans lequel une extrémité supérieure de segment (30, 40) est disposée à un côté supérieur (37, 47) et une extrémité inférieure de segment (31, 41) est disposée à un côté inférieur (38, 48) du module d'alimentation (3, 4), comprenant les étapes suivantes:
disposer le côté supérieur (37, 47) d'un premier module d'alimentation séparé (3) à une extrémité supérieure (17) de la tour d'éolienne (1);
assembler une extrémité supérieure de segment (30) du premier module d'alimentation séparé (3) à une extrémité inférieure de segment (41) d'un composant du système correspondant (33, 34, 35, 36) d'un deuxième module d'alimentation séparé (4); et
disposer le côté supérieur (47) du deuxième module d'alimentation séparé (4) à l'extrémité supérieure (17) de la tour d'éolienne (1).

2. Procédé selon la revendication 1, **caractérisé par** la préparation d'une plate-forme de travail (6) à l'extrémité supérieure (17) de la tour d'éolienne (1) avant d'introduire les modules d'alimentation séparés (3, 4) .

3. Procédé selon l'une quelconque des revendications précédentes, **caractérisé en ce qu'**avant l'introduction des modules d'alimentation séparés (3, 4) dans la tour d'éolienne (1), on prépare un dispositif de maintien (5) à l'extrémité supérieure (17) de la tour d'éolienne (1) pour la suspension au moins provisoire d'un module d'alimentation séparé (3, 4), dans lequel le dispositif de maintien (5) comprend de préférence au moins un dispositif de liaison (51, 52) pour la liaison à un module d'alimentation séparé (3, 4).

4. Procédé selon la revendication 3, **caractérisé en ce que** le dispositif de maintien (5) présente au moins une patte porte-charge (53) fixée à la paroi de la tour ou au côté supérieur de la tour, à laquelle on fixe le dernier module d'alimentation séparé après l'introduction du dernier module d'alimentation séparé.

5. Procédé selon une des revendications 3 à 4, **caractérisé en ce qu'**après l'introduction du dernier module d'alimentation séparé, on suspend le dernier module d'alimentation séparé au-dessus du côté supérieur de la tour à l'aide d'au moins une plaque porteuse pliée (54) et on le fixe à la paroi de la tour ou au côté supérieur de la tour.

6. Procédé selon l'une quelconque des revendications 3 à 5, **caractérisé en ce que** le dispositif de liaison (51, 52) comprend au moins une manille et/ou au moins une sangle de levage.

7. Procédé selon l'une quelconque des revendications 3 à 6, **caractérisé en ce que** le dispositif de maintien (5) comprend au moins un élément porteur (55) fixé à la paroi de la tour, auquel un module porteur (8) comprenant une partie de suspension (81) est fixé de façon séparable, dans lequel le module d'alimentation (3) présente un élément de suspension (49), avec lequel on suspend le module d'alimentation séparé (3) à la partie de suspension (81) du module porteur (8) après l'agencement du côté supérieur (37, 47) à une extrémité supérieure (17) de la tour d'éolienne (1).

8. Procédé selon l'une quelconque des revendications 3 à 7, **caractérisé par** la suspension d'un premier module d'alimentation séparé (3) à l'extrémité supérieure (17) de la tour d'éolienne (1) avant l'assemblage des segments des composants du système (33, 34, 35, 36) du premier et du deuxième modules d'alimentation séparés (4).

9. Procédé selon l'une quelconque des revendications précédentes, **caractérisé par** la formation de la tour d'éolienne (1) en au moins deux segments de tour (10, 11, 12, 13, 14, 15, 16), dans lequel les modules d'alimentation séparés (3, 4) portent de préférence sur plusieurs segments de tour (10, 11, 12, 13, 14, 15, 16).

10. Procédé selon l'une quelconque des revendications précédentes, **caractérisé en ce que** les composants du système (33, 34, 35, 36) comprennent des moyens de transport de puissance (33), des moyens de transport de signaux (34), des moyens lumineux (35) et/ou un dispositif d'ascension (36) pour le personnel de service.

11. Procédé selon l'une quelconque des revendications précédentes, **caractérisé par** l'installation d'une tour tubulaire en acier (18) comme partie supérieure de la tour d'éolienne (1), dans lequel la partie inférieure est une tour en béton (19); et l'introduction des modules d'alimentation (3, 4) dans la tour en béton (19) avant la mise en place d'une tour tubulaire en acier (18).

12. Procédé selon l'une quelconque des revendications précédentes, **caractérisé en ce qu'**avant l'introduction des modules d'alimentation séparés (3, 4) dans la tour d'éolienne (1), on fixe à au moins un des modules d'alimentation séparés (3, 4) au moins un dispositif de fixation (9), qui présente un élément de serrage (92) assemblé au module d'alimentation (3, 4) et un élément de guidage (94) disposé entre l'élément de serrage (92) et le module d'alimentation séparé (3, 4) et comprenant une pièce de fixation (91) saillante latéralement au module d'alimentation (3, 4).

13. Procédé selon la revendication 12, **caractérisé en ce qu'**après l'introduction d'un dernier module d'alimentation séparé (3, 4), on fixe le dispositif de fixation (9) à la paroi de tour de la tour d'éolienne (1) au moyen de la pièce de fixation (91); et on serre l'élément de guidage (94) sur le module d'alimentation séparé (3, 4) au moyen de l'élément de serrage (92).
